# EUROPÄISCHE PATENTSCHRIFT

(11) **EP 0 447 883 B1**
(45) Veröffentlichungstag und Bekanntmachung des Hinweises auf die Patenterteilung: **08.12.1993**
(21) Anmeldenummer: 91103445.2
(22) Anmeldetag: 07.03.1991
(51) Int. Cl.: B29B 7/76

(54) **Vorrichtung und Verfahren zum Mischen von wenigstens zwei reaktiven Kunststoffkomponenten**
Device and method for mixing at least two reactive plastic components
Dispositif et procédé pour mélanger au moins deux composants réactifs de matière plastique

(30) Priorität: 23.03.1990 DE 4009465
(43) Veröffentlichungstag der Anmeldung: 25.09.1991
(73) Patentinhaber: Krauss-Maffei Aktiengesellschaft, 80997 München (DE)
(72) Erfinder: Bauer, Adolf, Ing. (grad.), W-8037 Olching (DE); Mertens, Gereon, Dr. rer. pol., W-8133 Feldafing (DE)

(56) Entgegenhaltungen:
- EP-A- 0 024 330
- EP-A- 0 070 486
- EP-A- 0 132 443
- EP-A- 0 162 130
- EP-A- 0 347 712
- DE-A- 2 645 937
- DE-A- 3 612 125
- PATENT ABSTRACTS OF JAPAN, Band 12 Nr. 338 (C-527)[3185], 12. September 1988;& JP-A-63 97 218 (POLYURETHAN ENG.) 17-04-1988

## Beschreibung

Die Erfindung bezieht sich auf eine Vorrichtung zum Mischen von wenigstens zwei reaktiven Kunststoffkomponenten gemäß dem Oberbegriff des Patentanspruchs 1 sowie auf ein Verfahren zum Betrieb der Vorrichtung.

Eine Vorrichtung dieser Art ist aus der DE-PS 23 27 269 bekannt, bei der die der Mischkammer im rechten Winkel nachgeordnete Beruhigungskammer die Aufgabe besitzt das turbulent aus der Mischkammer austretende Komponentengemisch zu beruhigen, ehe es in die Form gelangt.

Mischköpfe dieser Art erfordern jedoch zur Steuerung des Druckes in der Mischkammer eine Androsselung der Mischkammeraustrittsöffnung, die nach der DE-PS 31 20 482 dadurch erreicht wird, daß der Kolben der Beruhigungskammer mit seinem vorderen Ende unmittelbar an der Mischkammeraustrittsöffnung ein Staustück bildet, in dem er in einer Zwischenstellung arretierbar ist. Ein Nachteil dieser Androsselung besteht darin, daß die Austragsleistung durch die Drosselung beschränkt ist.

Der Erfindung liegt daher die Aufgabe zugrunde, eine Vorrichtung der genannten Art dahingehend zu verbessern, daß bei einem durch Umlenkung beruhigtem Auslauf die Austragsleistung nicht durch Androsselungs- und Staueinrichtungen beeinträchtigt wird.

Die Lösung dieser Aufgabe erfolgt durch die im Patentanspruch 1 angegebenen Merkmale; die Unteransprüche betreffen vorteilhafte Ausgestaltungen der Erfindung.

In der Regel werden die Querschnittsflächen der der Mischkammer nachgeordneten ersten und zweiten Beruhigungskammer mit jeweils erweiterten Querschnittsflächen ausgeführt.

In einer vorteilhaften Ausführungsform kann jedoch die Querschnittsfläche der zweiten Beruhigungskammer gleich oder kleiner als die der ersten Beruhigungskammer ausgeführt werden, womit bei im wesentlichen uneingeschränkter Austragsleistung und guter Durchmischungswirkung aufgrund der doppelten Umlenkung der Druck in der Mischkammer in gleichwirkender Weise wie bei der Androsselung nach der DE-PS 31 20 482 beeinflußt werden kann.

In einer Ausführungsform können in die erste Beruhigungskammer weitere Zusatzkomponenten eingeleitet werden, wobei die Injektionsöffnungen in gleicher Weise durch den Kolben der ersten Beruhigungskammer auf- und zugesteuert werden können, wie die Injektionsöffnungen der vorgeschalteten Mischkammer, die bei diesem Verfahrensschritt verschlossen ist. In vorteilhafter Weise können damit Zusatzkomponenten, wie z.B. Lackkomponenten in einem nachgeordneten Verfahrensschritt gemischt und in die Form gefördert werden. Diese Einrichtung kann insbesondere beim sogenannten "In-mold coating" (z.B. gemäß US-PS 4,668,460) vorteilhaft sein. Die erfindungsgemäße Vorrichtung wird dabei gemäß den im Unteranspruch 21 vorgeschlagenen Maßnahmen betrieben. Dabei wird in einem dem normalen Betriebsablauf entsprechenden ersten Verfahrensschritt zunächst in der Mischkammer ein Gemisch aus reaktiven Kunststoffkomponenten zur Herstellung des Grundformteils, beispielsweise einer Stoßstange eines Kraftfahrzeugs, erzeugt. Das Gemisch strömt dabei aus der Mischkammer über die erste und zweite Beruhigungskammer in den Fromhohlraum. Anschließend wird das verbleibende Gemisch zuerst aus der Mischkammer durch den Mischkammerkolben und dann in sequentieller Abfolge durch die Kolben der ersten und zweiten Beruhigungskammer ausgestoßen. In einem zweiten, nachgeordneten Verfahrensschritt bleibt die Mischkammer verschlossen, wobei der Kolben der ersten Beruhigungskammer zurückgezogen wird und die Injektionsöffnungen für die Zufuhr von weiteren reaktiven Kunststoffkomponenten, beispielsweise Lackkomponenten freigibt. Das in der ersten Beruhigungskammer sich bildende Gemisch wird dann in die zweite Beruhigungskammer geleitet, wobei der Kolben in dieser Kammer im Maße der Befüllung zurückgezogen oder zurückgeschoben wird, bis in dieser zweiten Beruhigungskammer eine der im zweiten Verfahrensschritt vorgesehenen Gemischmenge enthalten ist. Die Austrittsöffnung der zweiten Beruhigungskammer kann dabei durch einen in der erfindungsgemäßen Vorrichtung oder im Angußteil des Formwerkzeugs angeordneten Verschlußschieber verschlossen sein. Die erste Beruhigungskammer wird sodann verschlossen, worauf der Kolben mit hoher Kraft vorgeschoben wird und das Komponentengemisch, beispielsweise das Lackkomponentengemisch, bei geöffneten Verschlußschieber mit hohem Druck (250 bis 1000 bar) in die From einspritzt. Dabei bewirkt der hohe Druck, daß sich das Komponentengemisch, gleichmäßig und oberflächendeckend auf das im ersten Verfahrensschritt hergestellte Grundformteil verteilt. Ein aus einer Stoßstange bestehendes Grundformteil kann somit bei Verbleib in ein und demselben Formwerkzeug mit Lack beschichtet werden.

Das vorbeschriebene "In-mold coating" kann dabei auch gemäß den im Unteranspruch 20 vorgeschlagenen Maßnahmen betrieben werden, wobei der erste Verfahrensschritt zur Herstellung des Grundformteils, beispielsweise einer Stoßstange, durch eine andere Vorrichtung durchgeführt werden kann. Diese Vorrichtung kann aus einer Spritzgießmaschine für thermoplastische Kunststoffe bestehen oder aus einer Polyurethanspritzgießmaschine bestehen, wie sie Gegenstand der vorliegenden Erfindung ist. Im zweiten Verfahrensschritt wird nach den Maßgaben des Unteranspruchs 20 verfahren, wobei im Gegensatz zu den Maßnahmen des Unteranspruchs 20 das Gemisch für die weiteren Komponenten, beispielsweise die Lack-Kunststoffkomponenten nicht in der ersten Beruhigungskammer sondern in der Mischkammer gebildet wird. Der weitere Ablauf erfolgt dabei wie beim zweiten Verfahrensschritt gemäß Unteranspruch 21, jedoch mit dem Unterschied, daß das Gemisch aus der Mischkammer über die erste Beruhigungskammer in die zweite Beruhigungskammer geleitet wird. Die zweite Beruhigungskammer wird sodann als Speicher genutzt, dessen Inhalt dann bei geschlossener erster Beruhigungskammer unter hohem Druck zum Zweck der Oberflächenbeschichtung des im ersten Verfahrensschritt von einer anderen Vorrichtung gespritzten Grundformteils in dieselbe Form gespritzt wird.

Die Erfindung wird nachstehend anhand der Zeichnung näher erläutert. Es zeigen:
- Fig. 1: in schematischer Halbschnittdarstellung einen aus einer Mischkammer und einer ersten und einer zweiten Beruhigungskammer bestehenden Mischkopf,
- Fig. 2: in schematischer Darstellung die Anordnung von Mischkammer, erster und zweiter Beruhigungskammer mit im spitzen Winkel zur ersten Beruhigungskammer angeordneter Mischkammer,
- Fig. 3: den Mischkopf nach Fig. 2, jedoch mit im Winkel zur Ebene der ersten und zweiten Beruhigungskammer angeordneter Mischkammer,
- Fig. 4: in schematischer Darstellung einen Mischkopf nach Fig. 1 jedoch mit einer mit einer Sammelkammer ausgestatteten ersten Beruhigungskammer und mit einem Verschlußschieber an der Austrittsöffnung der zweiten Beruhigungskammer.

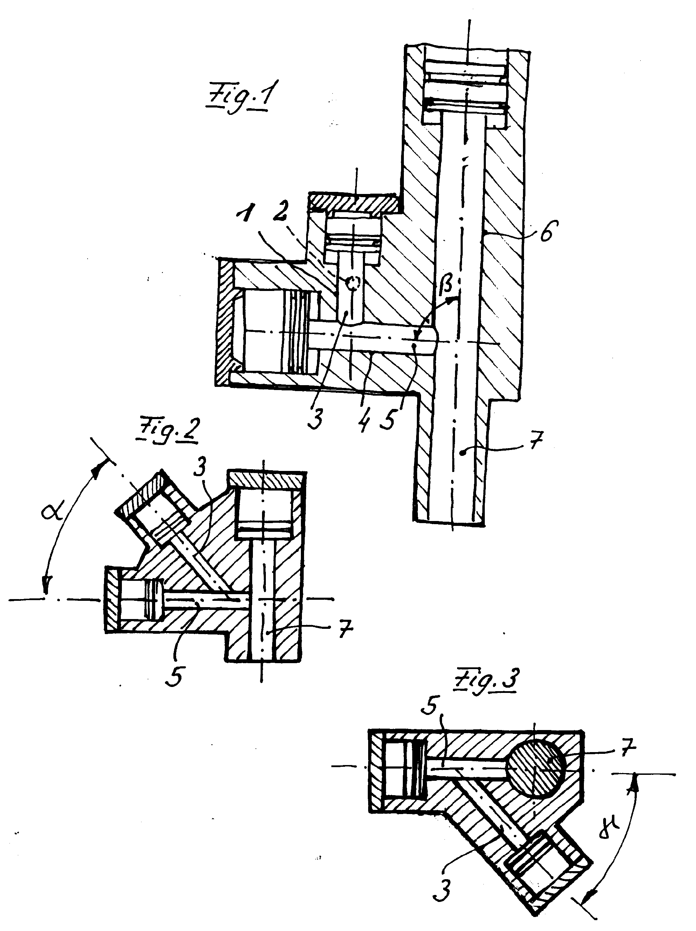

Der Mischkopf nach Fig. 1 zeigt eine Mischkammer 1, in die Injektionsöffnungen für die Zufuhr von chemisch reaktiven Kunststoffkomponenten einmünden. Von diesen, in fluchtender Linie gegenüberliegenden Injektionsöffnungen ist nur eine Injektionsöffnung 2 in unterbrochenen Linien dargestellt, die von dem in der Mischkammer 1 angeordneten Steuerkolben 3 verdeckt ist. Die Mischkammer 1 mündet in eine erste Beruhigungskammer 4 in der ein erster Kolben 5 reversierbar angeordnet ist. Der ersten Beruhigungskammer 4 ist eine zweite Beruhigungskammer 6 nachgeordnet, in der ein zweiter Kolben 7 reversierbar angeordnet ist. Die Querschnittsfläche der zweiten Beruhigungskammer 6 ist größer als die der ersten Beruhigungskammer 4, wobei diese wiederum einen größeren Querschnitt aufweist als die Mischkammer 1. Nach Fig. 1 sind der Steuerkolben 3 und der erste und zweite Kolben 5 und 7 in geschlossener Stellung dargestellt.

Die Steuerung des Mischkopfes erfolgt in der Weise, daß vor der Dosierung die erste und zweite Beruhigungskammer 4 und 6 durch den ersten und zweiten Kolben 5 und 7 freigegeben sind. Bei Abruf des Schusses wird der Steuerkolben 3 in der Mischkammer 1 zurückgezogen, worauf die Kunststoffkomponenten durch die Injektionsöffnungen eingespritzt werden und sich in der Mischkammer innig durchmischen. Das Gemisch gelangt über die erste Beruhigungskammer 4 in die zweite Beruhigungskammer 6 und von dort in den Formhohlraum des Formwerkzeugs (nicht dargestellt). Nach dem Ende des Schusses schließt zuerst der Steuerkolben 3 der Mischkammer 1, unmittelbar danach der erste Kolben 5 der ersten Beuhigungskammer 4 und dann der zweite Kolben 7 der zweiten Beruhigungskammer 6, wobei das Gemisch vollständig aus dem Mischkopf ausgeräumt wird. Der Vorteil dieses Mischkopfes liegt auch in seiner Bauweise, da die zweite Beruhigungskammer 6 in der Querschnittsfläche frei gewählt werden kann, da zwischen der ersten und der zweiten Beruhigungskammer keine Androsselung erfolgen muß.

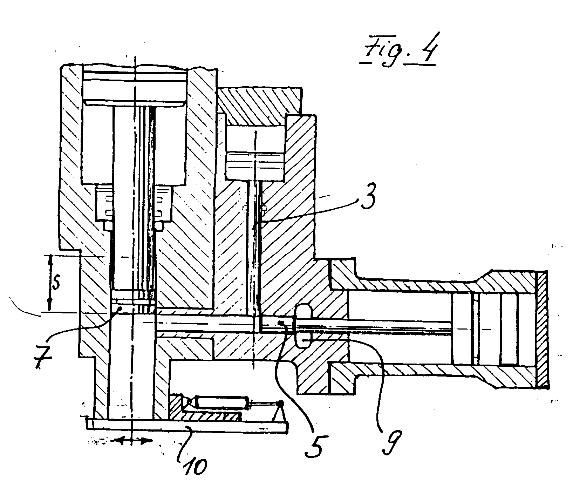

Die Mischkammer 1 kann dabei, wie in den Figuren 2 und 3 schematisch dargestellt, in einem spitzen oder in einem stumpfen Winkel α in die erste Beruhigungskammer 4 einmünden.

Es können dabei auch mehrere Mischkammern (nicht dargestellt) vorgesehen werden, die gemeinsam in die erste Beruhigungskammer 4 einmünden.

In gleicher Weise kann auch die erste Beruhigungskammer 4 in einem spitzen oder einem stumpfen Winkel β in die zweite Beruhigungskammer 6 einmünden.

Der Winkel α bzw. β wird im Hinblick auf optimale Werte von Gemisch- und Strömungsqualität (beruhigter Auslauf) gewählt. In der Regel sind jedoch rechtwinkelige Anordnungen ausreichend.

Der Mischkopf nach Fig. 4 entspricht im wesentlichen dem Mischkopf nach Fig. 1, weist jedoch Abänderungen auf, die diesen Mischkopf für das "In-mold coating" besonders geeignet machen. Der erste Kolben 5 der ersten Beruhigungskammer 4 weist einen dem Durchmesser der ersten Beruhigungskammer 4 entsprechenden Kolbenkopf 8 auf und hat ansonsten einen geringeren Durchmesser. Die erste Beruhigungskammer 4 weist im rückwärtigen Bereich eine Sammelkammer 9 auf, die beispielsweise durch Druckluftbeaufschlagung (nicht dargestellt) gereinigt werden kann. Die zweite Beruhigungskammer 6 und der zweite Kolben 7 sind so gestaltet, daß oberhalb der Austrittsöffnung der ersten Beruhigungskammer 4 noch ein Speichervolumen gewünschter Größe einstellbar ist. An der Austrittsöffnung der zweiten Beruhigungskammer 6 befindet sich ein Verschlußschieber 10.

Beim Bertieb nach dem "In-mold coating" wird in einem ersten Verfahrensschritt zunächst mit einem anderen Mischkopf ein Grundformteil gespritzt und nach dem Aushärten im Formwerkzeug belassen.

In einem zweiten Verfahrensschritt wird der in Fig. 4 dargestellte Mischkopf an das Formwerkzeug angesetzt und in der Weise betrieben, daß eine der vorgesehenen Spritzmenge entsprechende Gemischmenge in der Mischkammer 1 erzeugt wird, die dann nach Überleitung über die erste Beruhigungskammer 4 in die zweite Beruhigungskammer 6 gelangt und dort bei geschlossenem Verschlußventil 10 und zurückgeschobenem zweiten Kolben 7 ein Speichervolumen füllt. Nach dem Ausstoßen der restlichen Gemischmengen aus der Mischkammer 1 und der ersten Beruhigungskammer 4, ist das gewünschte Speichervolumen erreicht, worauf bei geschlossener Austrittsöffnung der ersten Beruhigungskammer 4 und bei geöffnetem Verschlußventil 10, die im Speichervolumen enthaltene Gemischmenge unter hohem Druck (z.B. 1000 bar) in das Formwerkzeug gespritzt wird. Bei diesem hohen Druck wird das in der Form befindliche Grundformteil mit der Gemischmenge aus dem Speichervolumen oberflächendeckend beschichtet. Durch den hohen Druck eventuell in die erste Beruhigungskammer 4 gelangende Gemischmengen werden vom Kolbenkopf 8 des ersten Kolbens 5 beim nächsten Rückwärtshub in die Sammelkammer 9 gefördert und können von dort ausgetragen werden. In gleicher Weise können der zweite Kolben 7 und die zweite Beruhigungskammer 6 ausgebildet sein, so daß die Folgen eventueller Undichtigkeiten des zweiten Kolbens 7 in gleicher Weise beseitigt werden können.

## Patentansprüche

1. Vorrichtung zum Mischen von wenigstens zwei reaktiven Kunststoffkomponenten unter hohem Druck, mit einer zylindrischen Mischkammer (1), in welche die Kunststoffkomponenten injiziert werden, wobei zum Austragen von restlichem reaktivem Kunststoffgemisch innerhalb der Mischkammer (1) ein reversierbarer Mischkammerkolben (3) angeordnet ist, und mit einer zylindrischen Beruhigungskammer (4), welche sich an die Mischkammer (1) anschließt und in einem Winkel zur Längsachse der Mischkammer verläuft, wobei in der Beruhigungskammer (4) ein reversierbarer Beruhigungskammer-Kolben (5) angeordnet ist, **dadurch gekennzeichnet**, daß der Beruhigungskammer (4) als erster Beruhigungskammer 4 im Winkel eine zweite Beruhigungskammer (6) mit einem zweiten reversierbaren Kolben (7) nachgeordnet ist.

2. Vorrichtung nach Anspruch 1, **dadurch gekennzeichnet**, daß die Querschnittsfläche der zweiten Beruhigungskammer (6) gleich oder größer als die Queerschnittsfläche der ersten Beruhigungskammer (4) ist.

3. Vorrichtung nach Anspruch 1, **dadurch gekennzeichnet**, daß die Querschnittsfläche der zweiten Beruhigungskammer (6) kleiner als die Querschnittsfläche der ersten Beruhigungskammer (4) ist.

4. Vorrichtung nach Anspruch 2, **dadurch gekennzeichnet**, daß die Querschnittsfläche der ersten Beruhigungskammer (4) in an sich bekannter Weise gleich oder größer ist als die Querschnittsfläche der Mischkammer (1).

5. Vorrichtung nach einem der Ansprüche 1 bis 4, **dadurch gekennzeichnet**, daß die erste Beruhigungskammer (4) eine oder mehrere, vom ersten Kolben (5) auf- und zusteuerbare Injektionsöffnungen für Zusatzkomponenten aufweist.

6. Vorrichtung nach einem der Ansprüche 1 bis 5, dadurch gekennzeichnet, daß die Mischkammer (1) in einem Winkelbereich von einem spitzen bis zu einem stumpfen Winkel α in die erste Beruhigungskammer (4) einmündet.

7. Vorrichtung nach einem der Ansprüche 1 bis 6, dadurch gekennzeichnet, daß die erste Beruhigungskammer (4) in einem Winkelbereich von einem spitzen bis zu einem stumpfen Winkel β in die zweite Beruhigungskammer (6) einmündet.

8. Vorrichtung nach einem der Ansprüche 1 bis 7, dadurch gekennzeichnet, daß die Mittellinien der Mischkammer (1) sowie der ersten und der zweiten Beruhigungskammer (4,6) in einer Ebene liegen.

9. Vorrichtung nach einem der Ansprüche 1 bis 7, dadurch gekennzeichnet, daß die Mittellinien der ersten und der zweiten Beruhigungskammer (4,6) in einer Ebene liegen und die Mittellinie der Mischkammer (1) in einen Winkel γ zu dieser Ebene angeordnet ist.

10. Vorrichtung nach einem der Ansprüche 1 bis 9, dadurch gekennzeichnet, daß mehr als eine Mischkammer (1) in die erste Beruhigungskammer (4) einmündet, wobei die Summe der Querschnittsflächen der Mischkammern gleich oder größer ist als die Querschnittsfläche der ersten Beruhigungskammer (4).

11. Vorrichtung nach Anspruch 10, dadurch gekennzeichnet, daß das Gemisch-Speichervolumen S der zweiten Beruhigungskammer (6) mindestens dem Volumen des zu formenden Werkstücks entspricht.

12. Vorrichtung nach Anspruch 11, **dadurch gekennzeichnet**, daß die Länge der zweiten Beruhigungskammer (6) nach der Maßgabe bemessen ist, daß sich bei geringer Querschnittsfläche der zweiten Beruhigungskammer (6) ein langer Hubweg für den zweiten Kolben (7) der zweiten Beruhigungskammer (6) ergibt.

13. Vorrichtung nach Anspruch 11, **dadurch gekennzeichnet**, daß die Austrittsöffnung der ersten Beruhigungskammer (4) unmittelbar an der Austrittsöffnung der zweiten Beruhigungskammer (6) in diese einmündet.

14. Vorrichtung nach einem der Ansprüche 1 bis 12, **dadurch gekennzeichnet**, daß an der Austrittsöffnung der zweiten Beruhigungskammer (6) ein Verschlußschieber (10) angeordnet ist.

15. Vorrichtung nach einem der Ansprüche 1 bis 12, **dadurch gekennzeichnet**, daß im Anschluß an die Austrittsöffnung der zweiten Beruhigungskammer (6) im Formwerkzeug ein Verschlußschieber (10) angeordnet ist.

16. Vorrichtung nach einem der Ansprüche 1 bis 15, **dadurch gekennzeichnet**, daß in die erste Beruhigungskammer (4) Injektionsöffnungen münden, durch die bei verschlossener Mischkammer (1) wenigstens zwei weitere reaktive Kunststoffkomponenten, vorzugsweise Lackkomponenten, einspritzbar sind.

17. Vorrichtung nach einem der Ansprüche 1 bis 16, **dadurch gekennzeichnet**, daß mindestens einer der Kolben (5,7) der ersten und zweiten Beruhigungskammer (4,6) am Kolbenkopf den Durchmesser der jeweiligen Beruhigungskammer (4,6) aufweist und im rückwärtigen Teil einen geringeren Durchmesser aufweist.

18. Vorrichtung nach Anspruch 17, **dadurch gekennzeichnet**, daß der Kolbenkopf mindestens eines der Kolben (5,7) eine nachstellbare Ringdichtung aufweist.

19. Vorrichtung nach einem der Ansprüche 17 oder 18, dadurch gekennzeichnet, daß sich mindestens eine der Beruhigungskammern (4,6), vorzugsweise die erste Beruhigungskammer (4), in den, den Auslaßöffnungen entgegengesetzten Bereichen zu Sammelkammern (9) erweitern.

20. Verfahren zum Betreiben der Vorrichtung nach einem der Ansprüche 1 bis 15, dadurch gekennzeichnet, daß die aus der Mischkammer (1), der ersten und der zweiten Beruhigungskammer (4 und 6) bestehende Vorrichtung im Anschluß an einen durch eine andere Spritzvorrichtung durchgeführten Spritzvorgang zur Herstellung des Grundformteils, an das Formwerkzeug angesetzt wird, wobei das in der Mischkammer (1) erzeugte Komponentengemisch unter weiterer Vermischung in die erste Beruhigungskammer (4) geleitet wird, und von dort in die zweite Beruhigungskammer (6) derart eingeleitet wird, daß beim Einleiten des Gemisches der Kolben (7) der zweiten Beruhigungskammer (6) solange zurückbewegt wird, bis das für den Spritzvorgang vorgesehene Spritzvolumen erreicht ist, worauf die erste Beruhigungskammer (4) verschlossen wird und der Kolben (7) der zweiten Beruhigungskammer (6) nach der Maßgabe vorgeschoben wird, daß das Komponentengemisch, vorzugsweise ein aus Lackkomponenten bestehendes Gemisch, unter hohem Druck in das Formwerkzeug gespritzt wird und das im Formwerkzeug befindliche Grundformteil (nach dem "In-mold-Verfahren") mit dem Komponentengemisch oberflächendeckend beschichtet wird.

21. Verfahren zum Betreiben der Vorrichtung nach Anspruch 20, **dadurch gekennzeichnet**, daß in einem ersten Verfahrensschritt das Grundformteil in der Weise hergestellt wird, daß das in der Mischkammer (1) gebildete Gemisch nach Überleitung über die erste und die zweite Beruhigungskammer (4 und 6) in die Spritzgießform gespritzt wird und in einem anschließenden Verfahrensschritt die Mischkammer (1) geschlossen wird und in der ersten Beruhigungskammer (4) ein weiteres, vorzugsweise aus Lackkomponenten bestehendes Komponentengemisch gebildet wird, das in die zweite Beruhigungskammer (6) derart eingeleitet wird, daß beim Einleiten des Gemisches der Kolben (7) der zweiten Beruhigungskammer (6) solange zurückgezogen wird, bis das für den Spritzvorgang vorgesehene Spritzvolumen S erreicht ist, worauf die erste Beruhigungskammer (4) verschlossen wird und der Kolben (7) der zweiten Beruhigungskammer (6) nach der Maßgabe vorgeschoben wird, daß das vorzugsweise aus Lackkomponenten bestehende weitere Komponentengemisch unter hohem Druck in das Formwerkzeug gespritzt wird und das im Formwerkzeug im ersten Verfahrensschritt gespritzte Grundformteil oberflächendeckend beschichtet wird.

## Claims

1. An apparatus for blending at least two reactive synthetic plastics components under high pressure, with a cylindrical mixing chamber (1) into which the synthetic plastics components are injected, whereby for the discharge of residual reactive synthetic plastics mixture there is inside the mixing chamber (1) a reversible mixing chamber piston (5), and with a cylindrical settling chamber (4) adjacent the mixing chamber (1) and extending at an angle to the longitudinal axis of the mixing chamber, a reversible settling chamber piston (5), characterised in that on the downstream side of the settling chamber (4) as the first settling chamber (4) there is at an angle a second settling chamber (6) with a second reversible piston (7).

2. An apparatus according to Claim 1, characterised in that the cross-sectional area of the second settling chamber (6) is equal to or greater than the cross-sectional area of the first settling chamber (4).

3. An apparatus according to Claim 1, characterised in that the cross-sectional area of the second settling chamber (6) is smaller than the cross-sectional area of the first settling chamber (4).

4. An apparatus according to Claim 2, characterised in that the cross-sectional area of the first settling chamber (4) is in per se known manner equal to or greater than the cross-sectional area of the mixing chamber (1).

5. An apparatus according to one of Claims 1 to 4, characterised in that the first settling chamber (4) has one or a plurality of auxiliary component injection apertures which can be controlled to open or close by the first piston (5).

6. An apparatus according to one of Claims 1 to 5, characterised in that the mixing chamber (1) discharges into the first settling chamber (4) at an angle ranging from an acute to an obtuse angle α.

7. An apparatus according to one of Claims 1 to 6, characterised in that the first settling chamber (4) discharges into the second settling chamber (6) at an angle ranging from an acute to an obtuse angle β.

8. An apparatus according to one of Claims 1 to 7; characterised in that the central lines through the mixing chamber (1) as well as the first and second settling chambers (4, 6) lie in one plane.

9. An apparatus according to one of Claims 1 to 7, characterised in that the central lines through the first and second settling chambers (4, 6) lie in one plane and the central line through the mixing chamber (1) is disposed at an angle to this plane.

10. An apparatus according to one of Claims 1 to 9, characterised in that more than one mixing chamber (1) discharges into the first settling chamber (4), the sum of the cross-sectional areas of the mixing chambers being equal to or greater than the cross-sectional area of the first settling chamber (4).

11. An apparatus according to Claim 10, characterised in that the mixture storage space S in the second settling chamber (6) corresponds at least to the volume of the workpiece to be formed.

12. An apparatus according to Claim 11, characterised in that the length of the second settling chamber (6) is dimensioned in such a way that with minimal cross-sectional area of the second settling chamber (6) the second piston (7) of the second settling chamber (6) enjoys a long travel.

13. An apparatus according to Claim 11, characterised in that the outlet orifice of the second settling chamber (4) discharges into and is directly at the outlet orifice of the second settling chamber (6).

14. An apparatus according to one of Claims 1 to 12, characterised in that a sliding closure member (10) is disposed on the outlet orifice of the second settling chamber (6).

15. An apparatus according to one of Claims 1 to 12, characterised in that a sliding closure member (10) is disposed adjacent the outlet orifice of the second settling chamber (6) in the moulding tool.

16. An apparatus according to one of Claims 1 to 15, characterised in that opening into the first settling chamber (4) are injection apertures through which, when the mixing chamber (1) is closed, it is possible for at least two further reactive synthetic plastics components, preferably paint components, to be injected.

17. An apparatus according to one of Claims 1 to 16, characterised in that at least one of the pistons (5, 7) of the first and second settling chambers (4, 6) has at the piston head the diameter of the respective chamber (4, 6) and has a smaller diameter at the rear end.

18. An apparatus according to Claim 17, characterised in that the piston head of at least one of the pistons (5, 7) has an adjustable ring seal.

19. An apparatus according to one of Claims 17 or 18, characterised in that at least one of the settling chambers (4, 6), preferably the first settling chamber (4), widens out into collecting chambers (9) in the areas opposite the outlet orifices.

20. A method of operating the apparatus according to one of Claims 1 to 15, characterised in that following on from an injection process for producing the basic moulding and carried out by another injection moulding apparatus, the apparatus consisting of the mixing chamber (1), the first and second settling chambers (4 and 6), is applied to the moulding tool whereby the mixture of components created in the mixing chamber (1) is, while undergoing further mixing, fed into the first settling chamber (4) and thence into the second settling chamber (6) in such a way that during introduction of the mixture, the piston (7) of the second settling chamber (6) is moved back until such time as the injection volume envisaged for the injection moulding process is attained, whereupon the first settling chamber (4) is closed and the piston (7) of the second settling chamber (6) is advanced to the extent that the components mixture, preferably a mixture consisting of paint components, is injected under high pressure into the moulding tool and the basic moulding present in the moulding tool is surface-coated with the mixture of components (by the "in-mould process").

21. A method of operating the apparatus according to Claim 20, characterised in that in a first step in the process the basic moulding is produced in that the mixture formed in the mixing chamber (1), after being passed through the first and second settling chambers (4 and 6), is injected into the injection mould and in that, in a procedural step which follows thereon, the mixing chamber (1) is closed and in the first settling chamber (4) a further mixture of components is formed which preferably consists of paint components and this is so introduced into the second settling chamber (6) that upon introduction of the mixture the piston (7) of the second settling chamber (6) is retracted until such time as the injection volume S envisaged for the injection moulding process is attained, whereupon the first settling chamber (4) is closed and the piston (7) of the second settling chamber (6) is displaced to the extent that the further mixture of components consisting preferably of paint components, is injected under high pressure into the moulding tool and the basic moulding injected in the moulding tool during the first step of the process is coated so that its surface is covered.

## Revendications

1. Dispositif destiné à mélanger sous forte pression au moins deux composants réactifs générateurs d'une matière plastique, ce dispositif comportant une chambre (1) cylindrique de mélangeage dans laquelle ces composants sont injectés, un piston réversible (5) étant disposé dans cette chambre de mélangeage pour en faire sortir le mélange résiduel, ainsi qu'une chambre (4) cylindrique de repos, qui fait suite à ladite chambre (1) de mélangeage et est orientée sous un certain angle par rapport à l'axe longitudinal de cette chambre de mélangeage, un piston réversible (5) étant disposé dans cette chambre (4) de repos, dispositif caractérisé en ce qu'une seconde chambre (6) de repos, comportant un second piston réversible (7), est disposée sous un certain angle à la suite de la chambre (4) de repos qui constitue par conséquent une première chambre.

2. Dispositif selon la revendication 1, caractérisé en ce que la section transversale libre de la seconde chambre (6) de repos est égale ou supérieure à celle de la première chambre (4) de repos.

3. Dispositif selon la revendication 1, caractérisé en ce que la section transversale libre de la seconde chambre (6) de repos est plus petite que celle de la première chambre (4) de repos.

4. Dispositif selon la revendication 2, caractérisé en ce que la section transversale libre de la première chambre (4) de repos est, de manière connue, égale ou supérieure à celle de la chambre (1) de mélangeage.

5. Dispositif selon l'une des revendications 1 à 4, caractérisé en ce que la première chambre (4) de repos comporte un ou plusieurs canaux, pouvant être dégagés et obturés par le premier piston (5), pour l'injection de composants supplémentaires.

6. Dispositif selon l'une des revendications 1 à 5, caractérisé en ce que la chambre (1) de mélangeage débouche dans la première chambre (4) de repos sous un angle (α) compris dans une plage allant des angles aigus aux angles obtus.

7. Dispositif selon l'une des revendications 1 à 6, caractérisé en ce que la première chambre (4) de repos débouche dans la seconde chambre (6) sous un angle β compris dans une plage allant des angles aigus aux angles obtus.

8. Dispositif selon l'une des revendications 1 à 7, caractérisé en ce que les axes de la chambre (1) de mélangeage ainsi que de la première et de la seconde chambre (4, 6) de repos sont dans un même plan.

9. Dispositif selon l'une des revendications 1 à 7, caractérisé en ce que les axes des première et seconde chambres (4, 6) de repos sont dans un même plan et l'axe de la chambre (1) de mélangeage fait un angle γ avec ce plan.

10. Dispositif selon l'une des revendications 1 à 9, caractérisé en ce que plus d'une seule chambre (1) de mélangeage débouche dans la première chambre (4) de repos, la somme des sections de ces chambres de mélangeage étant égale ou supérieure à la section de cette première chambre (4) de repos.

11. Dispositif selon la revendication 10, caractérisé en ce que le volume S de la chambre-réservoir de la seconde chambre (6) de repos correspond au moins au volume de la pièce qui doit être moulée.

12. Dispositif selon la revendication 11, caractérisé en ce que la longueur de la seconde chambre (6) de repos est déterminée de façon que, plus la section de cette chambre (6) est faible, plus la course de son piston (7) soit longue.

13. Dispositif selon la revendication 11, caractérisé en ce que le passage de sortie de la première chambre (4) de repos débouche dans la seconde chambre (6) de repos juste à l'orifice de sortie de cette dernière.

14. Dispositif selon l'une des revendications 1 à 12, caractérisé en ce qu'un volet obturateur (10) coulissant est disposé à l'orifice de sortie de la seconde chambre (6) de repos.

15. Dispositif selon l'une des revendications 1 à 12, caractérisé en ce qu'un volet obturateur (10) coulissant est disposé près de l'orifice de sortie de la seconde chambre (6) de repos, dans l'outillage de moulage.

16. Dispositif selon l'une des revendications 1 à 15, caractérisé en ce que des canaux d'injection, par lesquels au moins deux composants réactifs supplémentaires générateurs de matière plastique, avantageusement les composants générateurs d'un vernis-émail, peuvent être injectés lorsque la chambre (1) de mélangeage est fermée, débouchent dans la première chambre (4) de repos.

17. Dispositif selon l'une des revendications 1 à 16, caractérisé en ce que l'un au moins des pistons (5, 7) des première et seconde chambres (4, 6) de repos présente à sa tête le diamètre de la chambre (4, 6) respective et en arrière un diamètre plus faible.

18. Dispositif selon la revendication 17, caractérisé en ce que la tête de l'un au moins des pistons (5, 7) comporte un joint annulaire de rattrapage de jeu.

19. Dispositif selon l'une des revendications 17 ou 18, caractérisé en ce que l'une au moins des chambres (4, 6) de repos, avantageusement la première (4), s'agrandit en formant une chambre collectrice (9) du côté opposé à son passage de sortie.

20. Procédé de manoeuvre du dispositif selon les revendications 1 à 15, caractérisé en ce que, après qu'un moulage par injection ait été effectué au moyen d'un autre dispositif pour mouler la pièce de base, le dispositif composé de la chambre (1) de mélangeage et des première et seconde chambres (4, 6) de repos est raccordé à l'outillage de moulage, le mélange de composants produit dans la chambre (1) de mélangeage étant introduit en continuant à être mélangé dans la première chambre (4) de repos et de là dans la seconde chambre (6), le piston (7) de cette seconde chambre (6) reculant pendant cette opération, jusqu'à ce que la quantité de mélange prévue pour l'injection soit obtenue, après quoi la première chambre (4) de repos est fermée et le piston (7) de la seconde chambre (6) est repoussé, de façon à injecter sous forte pression le mélange de composants, qui sont avantageusement les composants générateurs d'un vernis-émail, dans l'outillage de moulage et à recouvrir de ce mélange la surface de la pièce de base qui se trouve dans cet outillage de moulage (conformément au procédé "In-mold coating").

21. Procédé selon la revendication 20, de manoeuvre du dispositif, caractérisé en ce que, dans une première étape on forme la pièce moulée de base en injectant dans le moule le mélange formé dans la chambre (1) de mélangeage, après l'avoir fait passer dans les première et seconde chambres (4, 6) de repos et, dans une étape suivante, cette chambre (1) de mélangeage est fermée et il est formé dans la première chambre (4) de repos un autre mélange de composants, qui sont avantageusement les composants générateurs d'un vernis-émail, mélange qui est introduit dans la seconde chambre (6) de repos, cependant que le piston (7) de cette seconde chambre recule jusqu'à ce que le volume S prévu pour l'injection soit obtenu, après quoi la première chambre (4) de repos est fermée et le piston (7) de la seconde chambre (6) est repoussé et injecte dans l'outillage de moulage le mélange formé par les autres composants, avantageusement les composants générateurs d'un vernis-émail, en revêtant de ce mélange la surface de la pièce moulée dans cet outillage dans la première étape du procédé.
